(19) Europäisches Patentamt

European Patent Office

Office européen des brevets

(11) **EP 1 715 624 A1**

(12) **EUROPEAN PATENT APPLICATION**

(43) Date of publication:
**25.10.2006 Bulletin 2006/43**

(51) Int Cl.:
***H04L 12/26*** *(2006.01)*

(21) Application number: **06112837.7**

(22) Date of filing: **20.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.04.2005 US 674245 P**
**30.12.2005 US 321054**

(71) Applicant: **AT&T Corp.**
**New York, NY 10013-2412 (US)**

(72) Inventors:
• **Spatscheck, Oliver**
**Florham Park, NJ 07932-0971 (US)**
• **Sen, Subhabrata**
**Florham Park, NJ 07932-0971 (US)**
• **Wang, Dongmei**
**Florham Park, NJ 07932-0971 (US)**
• **Haffner, Patrick**
**Florham Park, NJ 07932-0971 (US)**

(74) Representative: **Harding, Richard Patrick**
**Marks & Clerk,**
**4220 Nash Court,**
**Oxford Business Park South**
**Oxford OX4 2RU (GB)**

(54) **Application signature based traffic classification**

(57)     A method for identifying traffic to an application including the steps of monitoring communication traffic in a network, identifying data from communication traffic content, and constructing a model for mapping the communication traffic for an application derived from data identified from the communication traffic content is described. A related system and computer readable medium for performing the method is also described. The described method and system has utility in a wide array of networks including IP networks.

Figure 2

**Description**

This application claims priority to provisional U.S. Application Ser. No. 60/674,245, filed April 22, 2005, herein incorporated by reference.

FIELD OF THE INVENTION

The invention relates generally to network traffic identification. More specifically, the invention provides a system and method for managing internet traffic.

**BACKGROUND OF THE INVENTION**

A range of network operations and management activities benefit from the ability to gather per-application measurements in the middle of the network. These operations and include traffic engineering, capacity planning, provisioning, service differentiation, performance/failure monitoring and root-cause analysis, and security. For example, enterprises would like to provide a degraded service (via rate-limiting, service differentiation, blocking) to P2P and extranet web traffic to ensure good performance for business critical applications, and/or to enforce corporate rules regarding access to certain types of applications and content. Broadband ISPs would like to limit the peer to peer traffic to limit the cost they are charged by upstream ISPs. Accordingly, network engineers need to develop workload characterizations and traffic models for emerging applications, for network capacity planning and provisioning. All this requires the ability to accurately identify the network traffic associated with different applications. Some uses of application identification such as performance monitoring and service differentiation require online classification early in the connection.

Significant need for improved mapping exists. For example, none of the known systems are capable of automate the construction of signatures for accurate real-time application traffic identification early in the connection. As such, an improved method and system for mapping traffic to applications is needed.

BRIEF SUMMARY OF THE INVENTION

To overcome limitations in the prior art described above, and to overcome other limitations that will be apparent upon reading and understanding the present specification, the present invention is directed to a method and system for identifying traffic to an application.

A first aspect of the invention provides a method for identifying traffic to an application including monitoring communication traffic in a network, identifying data from communication traffic content, and constructing a model for mapping the communication traffic for an application derived from data identified from the communication traffic content.

A second aspect of the invention provides a system for identifying traffic to an application that includes a controller communicably linked to network communication paths and mechanism for monitoring communication traffic content in a network, identifying data from communication traffic content; and constructing a model including training the model for mapping the communication traffic for an application derived from data identified from the communication traffic content.

A third aspect of the invention provides a computer readable medium that include instructions for monitoring communication traffic in a network, identifying data from communication traffic content, and constructing a model for mapping the communication traffic for an application derived from data identified from the communication traffic content.

BRIEF DESCRIPTION OF THE DRAWINGS

A more complete understanding of the present invention and the advantages thereof may be acquired by referring to the following description in consideration of the accompanying drawings, in which like reference numbers indicate like features, and wherein:

Figure 1 illustrates an embodiment of a network utilizing a method for identifying traffic to an application.

Figure 2 illustrates an embodiment of a method for identifying traffic application.

Figure 3 illustrates exemplary experimental results from an embodiment of a method for identifying traffic to an application.

Figure 4 illustrates exemplary experimental results from an embodiment of a method for identifying traffic to an application.

DETAILED DESCRIPTION OF THE INVENTION

In the following description of the various embodiments, reference is made to the accompanying drawings, which form a part hereof, and in which is shown by way of illustration various embodiments in which the invention may be practiced. It is to be understood that other embodiments may be utilized and structural and functional modifications may be made without departing from the scope of the present invention.

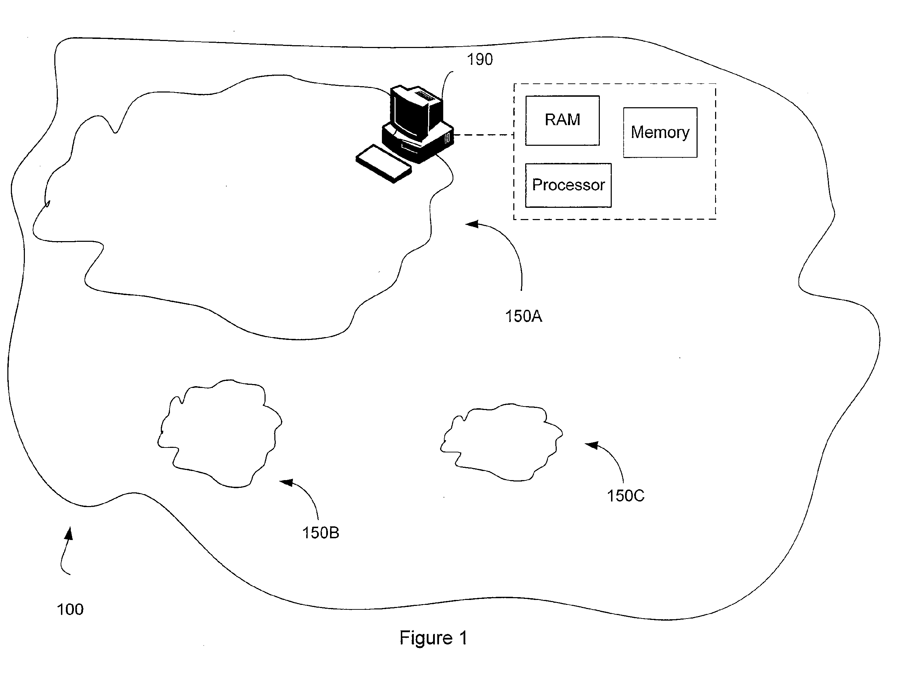

For clarity and explanation Figure 1 illustrates an embodiment of an illustrative network encompassing methods and systems described herein. For example, various computer readable instructions housed in a computer readable medium, including for example traffic classification software, may be executed on a controller 190 that may be located in an IP network 150A of a telecommunications network 100. Network 150A may be any type of network including traffic and is in no way limited as shown. Telecommunications network 100 may be any from an extremely large list of networks including communications, data transfer, internet, IP etc. The network may also contain wired, wireless or both mechanisms of communications. The controller 190 may serve numerous valuable roles in a monitoring or trafficking network communications. The controller 190 may be any computing device as appreciated by one skilled in the art. In the illustrative embodiment of Figure 1, controller 190 is shown as having a processor, RAM, and Memory, just to show a few basic components. Traffic data may be stored on the Memory and various instruction executed by the processor. The networks 150B and 150C may also include controllers similar to controller 190 or various other unrelated well known network controllers, processors, modules etc.

In networks, including for example Figure 1, an accurate mapping of traffic to applications is important for a broad range of network management and measurement tasks. Internet applications have traditionally been identified using well-known default server network-port numbers in the TCP or UDP headers. However this approach has become increasingly inaccurate. An alternate, more accurate technique is to use specific application-level features in the protocol exchange to guide the identification. Unfortunately deriving the signatures manually is very time consuming and difficult.

As such, automatically extracting application signatures from IP traffic payload content is described. In a three statistical machine learning method to automatically identify signatures for a range of applications. The results indicate that this approach is highly accurate and scales to allow online application identification on high speed links. It has been observed that content signatures still work in the presence of encryption. In these cases content signature was derived for unencrypted handshakes negotiating the encryption parameters of a particular connection.

**Application Identification:** Ideally, a network system administrator would possess precise information on the applications running inside the network, with unambiguous mappings between each application and its network traffic (eg., port numbers used, IP addresses sourcing, and receiving the particular application data) etc. However, in general, such information is rarely available, up-to-date or complete, and identifying the application-to-traffic associations is a challenging proposition. The traditional ad-hoc growth of IP networks, the continuing rapid proliferation of applications of different kinds, and the relative ease with which almost any user can add a new application to the traffic mix in the network with no centralized registration, are some factors contributing to this "knowledge gap". For instance, in the Virtual Private Network (VPN) world, it is not uncommon that while an operator is aware that a certain application (e.g., Lotus Notes) is being used in the enterprise, she possesses only partial information about the hosts and servers, across its global network, generating traffic for this application.

A traditional approach to traffic identification has been to use the TCP or UDP server port number to identify the higher layer application, by simply identifying which port is the server port and mapping this port to an application using the IANA (Internet Assigned Numbers Authority) list of registered (www.iana.org/assignments/ports-numbers) or well known ports. However, port-based application classification has been shown to be unreliable for a variety of reasons. There is substantial empirical evidence that an increasing number of applications use random port numbers to communicate. A recent study reports that the default port accounted for only 30% of the total traffic for the Kazaa P2Pprotocol, the rest being transmitted on non-standard ports. Also explained in detail is what causes this trend. To summarize: (i) applications use non-standard ports mainly to traverse firewalls, circumvent operating system restrictions or hide from detection, (ii) in some cases server ports are dynamically allocated as needed (for example, FTP allows the dynamic negotiation of the server port used for the data transfer), and (iii) port numbers can have limited fidelity - the same standard port can be used to transmit multiple applications. For example, Lotus Notes transmits both email and database transaction traffic over the same ports, and scp (secure copy), a file transfer protocol, runs over ssh (secure shell), which is also used interactively on the same port (TCP port 22).

Instead of port-numbers, one possibility is to use specific features present in the application traffic to guide the identification. In particular this *signature-based application classification* approach parses packets for application-level information and tries to match the content of a TCP/UDP connection against common signatures found in the target application.

Following are some key challenges in developing the application signatures. First is the lack of openly available reliable, complete, up-to-date and standard protocol specifications for many applications. This is partly due to developmental history and partly a result of whether the protocols are open or proprietary. For some protocols (e.g., Gnutella), there exists some documentation, but it is not complete, or up-to-date. In addition, there are various implementations, such as Gnutella clients which do not comply fully with the specifications in the available documentation. For an application classifier to be accurate, it is important to identify signatures that span all the variants or at least the dominantly used ones. At the other end of the spectrum is an application like SONY's Everquest gaming protocol, which is developed by a single organization and therefore exhibits a more homogeneous protocol deployment, but is a proprietary protocol with no authoritative protocol description openly available. Finally, note that the application signatures are not fixed, but may change with time as the corresponding applications and their protocols evolve. The signature construction process has to be applied repeatedly to keep up with the change dynamics.

Existing approaches to application signature identification involved a labor-intensive process combining information from available documentation with information gleaned from analysis of packet-level traces to develop potential signatures, and using multiple iterations to improve the accuracy and computation overhead. Such a painstaking manual approach will not scale if it has to be applied individually to the growing range and number of diverse Internet applications.

Automatic development of accurate signatures for individual applications is desired. The term *signature* is used to refer to a set of conditions defined over a set of features in the application traffic. A *classifier* is used to classify network traffic using such a signature - it marks all traffic that match the conditions outlined in the signature as belonging to the corresponding application.

Among key features for an effective signature composition method, the resultant signatures: (i) should be accurate, i.e., have low misclassification error rates, (ii) have low evaluation overheads to make it practicable to use the corresponding classifier for online real-time classification on high speed links, (iii) allow the classifier to identify the application early in the connection, (iv) be robust to asymmetric routing effects, and (v) must have good accuracy properties over an extended period of time. Finally, the method should have wide applicability and be capable of developing accurate, efficient signatures for a range of different applications.

The motivation for features (i) and (ii) are obvious considering the goal of identifying applications in real time on high speed links. Feature (iii) is motivated by the fact that in some cases these types of signatures will be used to react quickly. For example, in a QoS enabled VPN this signature might be used to change the class of service (CoS) for the flow. Therefore, if the flow is classified late the benefits of such an approach would be small. Fesature (iv) stems from the fact, that a measurement point may capture only one direction of a bidirectional communication due to the prevalence of asymmetric routing in the Internet; therefore it is important that the derived signature is able to identify the application with high accuracy, irrespective of which direction it sees. Feature (v) is desirable, because the network traffic mix (and relative proportions) even at a given link changes with time, even if the target application itself is unchanged. To be practicable, the developed signature should be robust to these effects, and remain accurate over extended time periods.

Machine learning has been used in data analysis. It has been demonstrated to be an efficient technique for classifying texts, including filtering spam messages and classifying documents based on a list of feature words inside them. Although machine learning has been used for network traffic classification, existing studies mostly considered statistical network flow attributes such as packet size distributions. The methods and systems described herein are the first such that explore the applicability of statistical machine learning techniques for identifying signatures based on application level content. Specifically, three learning methods - Naive Bayes, AdaBoost and Maximum Entropy are preferred and are implemented into the application signatures. The performance of the described methods implementing embodiments of these different learning methods is illustrated through experiments. Among the noteworhty metrics for accuracy comparison are *error rate, precision* and *recall.* These are defined later.

To demonstrate the wide applicability, three methods are used to develop signatures for a variety of network applications: ftp control, smtp, pop3, imap, https, http and ssh. Our evaluations of the resulting signatures, using real traffic traces from a tier-1 ISP, show that across the applications, the automatically constructed signatures exhibit (i) good accuracy properties (low error rate as well as high precision, and recall) based on inspecting only a modest initial portion of a communication, (ii) low evaluation overheads, and (iii) maintain good accuracy across several months.

Later, several illustrative embodiments are described in more detail. For example, an application identification problem is modeled and its features (described above), and then transform it to a statistical classification problem. A high level description of the three machine learning methods that applied in illustrative experiments addressing this classification problem is described. Accordingly, experimental results are shown along with conclusions and implementation observations.

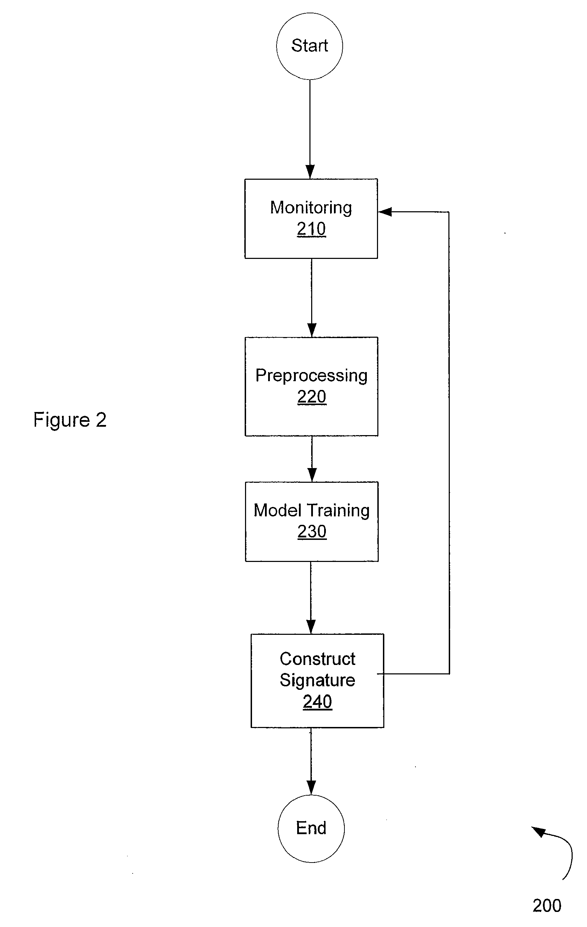

Figure 2 is a flow diagram 200 showing one illustrative embodiment of a method for automatically constructing application signatures. As shown, step 210 illustrates monitoring of traffic in a network. As described previously, the specific network composition and purpose may vary immensely. Monitoring may include various forms of data collection regarding communication traffic. For example, data may be identified in certain portions of the communication case being monitored. Next, data preprocessing 220 is performed. For example, the preclassified training set may be selected or formed. Certain parameters may be determined during preprocessing. These parameters typically vary depending on the specific methods implemented. In one illustrative embodiment, i.e. a method utilizing Adaboost, a determination may be made regarding utilization of a particular cost function and when to stop learning (see later steps). This data will then be used later in the method. Next, the model is trained 230. Model training is discussed in significant detail herein as are various potential substeps and features to model training. For ease of reference, formulation of the model including specific attributes may be referred to as construction of the model. Model construction may include for example, steps 220 and 230 in the illustrative example of flow diagram 200 in Figure 2. Model construction may include a variety of steps and substeps. Finally, the application signature is constructed in step 240 for use in the network. Once again, the particulars are described herein in further detail. The model and training features, substeps and attributes may be continuously modified over time to improve results. Also the model may subsequently or contemporaneously be modified during construction and may be applied to network traffic for a variety of applications. Further, numerous specific implementations are described and available for potential use. Various systems and devices are capable of performing such a function.

**A CLASSIFICATION PROBLEM** The described method and system have utility in a number of areas and applications. By way of example, one illustrative use of the described method and system is to determine which application a flow belongs to by inspecting application layer information only (above the TCP/UDP header),where a IP flow is defined by a (protocol ,srcIP, destIP, srcPort, destPort) tuple. Using this definition it is observed that the described classification approach is resilient to: (i) the use of random port numbers, (ii) changes in the network characteristics of an application such as average packet size, packet timing etc, and (iii) changes in the communication patterns of a client, to name a few.

The only persistence this approach may require to correctly identify an application is the persistence in the applications signature itself. As shown later, such persistent signatures for a range of applications may be determined. While in theory encryption technique scan be used to prevent or thwart content-signatures, signatures could still be for encrypted communication protocols such as ssh and https since both protocols perform an initial handshake in the clear. Still, more generally, it is expected that future identification techniques will rely on a composite approach combining different information such as statistical characteristics, content, and communication patterns etc. In this paper we explore the potential of one source of information- the application content. As outlined, a well-known machine learning algorithms may be used to automatically derive the application signature. These methods require a training phase during which a set of pre-classified feature vectors (training set) is processed by the methods. At the end of this phase a classifier is returned which can be used to determine a probability that a feature vector for which the class assignment is not known belongs to a particular class. This functionality is mapped onto the classification goal as follows:

*Single Application Signature:* Application signatures are derived to decide if a particular flow belongs to an application or not. Therefore, two classes (application, not application) exist. If multiple applications need to be classified we will treat them as individual classification problems, with the classification of one application versus all other applications. Defining multi category classification as a combination of *one-vs-other* binary classifiers has been shown to be a attractive approach, both in terms of performance and simplicity.

*Raw Data:* The raw application level data is encoded as a feature vector. An alternate approach would be to extract features such as ASCII words from the data stream before presenting them as a feature vector to the learning method. A drawback of a feature extraction phase is that it selects what is presented to the learning step, and structures which are not extracted as features are not visible to the learning method. The potential drawback of the raw data approach is that the number of raw features can grow very large. However this is not a problem for the classifiers considered herein which are *large margin* or *regularized and* thus able to generalize well with a large number of features. The raw data approach seems more suited to our particular problem domain where the actual useful features are unknown and can have a very wide range of structures depending on the protocol, its encoding etc.

*Only Initial data:* In an illustrative embodiment, the described method only considers the first n-Bytes of a data stream as features. There are three motivations for this choice. First, identifying traffic as early as possible is desirable. Second, for most application layer protocols, it is easy to identify application layer headers at the beginning of a data exchange and third, the amount of data the machine learning methods have to process is limited. In case of a TCP connection, if TCP reassembly is required, the first n-Bytes of the reassembled TCP data stream is considered. Note that since flows and not connections are identified, each TCP connection is treated as two independent reassembled TCP flows. This per-flow identification strategy was selected to facilitate developing a single per-application signature that is robust to a symmetric routing effects, e.g., that can identify the application with high accuracy by monitoring just one direction of the bidirectional communication.

*Discrete byte encoding:* Encode the first n-Byte of a flow with a feature vector *v* with *n*\*256 elements. All components of *v* are initially set to 0. Then for each byte in the input stream, the component *i*\*256+*c*[*i*] is set as 1, that is:

$$v[i * 256 + c[i]] = 1$$

Where *i* represents the position of a byte with value c[i]in the reassembled flow. Therefore, there are *n* non-zero components in the feature vector *v* for the flow. This binary vector v is used as input by the machine learning algorithms and classifiers. The reason for this choice is that classifiers studied here are known to work well on binary vectors.

Another important property of the discrete representation is that byte values are *equidistant* (based on Euclidean distance). A binary classifier draws a separation hyper plane in the space where the examples live. If some examples were to be closer in this classifier input space, they would be considered as more similar. In other words, two examples with a smaller Euclidean distance are not separated easily, and tend to belong to the same class. For example, consider three byte streams $c_1$, $c_2$, $c_3$ of length one with $c_1[0] = [A]$, $c_2[0] = [B]$, $c_3[0] = [Z]$. If we would encode each byte in the Byte stream as a single integer the distance between $c_1$ and $c_2$ would be 1 whereas the distance between $c_1$ and $c_3$ would be 25. Therefore, the classifier has a harder time separating $c_1$ from $c_2$ than from $c_3$. This is counterproductive if for example, we want to identify all flows starting with an [A]. Using our feature vector encoding the distance between two feature vectors of equal length will always be identical removing this unwanted bias. Using these mappings, the machine learning methods may be applied to the application classification problem.

Lastly, definitions of the three metrics used to measure signature accuracy are provided. Given a dataset of size S consisting of application and non-application flows, if a non-application flow is identified as an application flow according to the constructed signatures, it is called *false positive misclassification* and FP denotes the total number of false positive misclassifications. Similarly, if an application flow is identified as non-application according to the constructed signatures, is called a *false negative misclassification* and FN denotes the total number of false negative misclassifications. The True Positive TP is defined to be the total number of application flows that are correctly identified by the constructed signature. Then, the *error rate* is defined as (FP + FN) * 100/S. The *precision* n is the number of actual application flows as a fraction of the total number of flows identified as belonging to the application, that is, TP/ (TP + FP). The *recall* is the number of actual application flows as a fraction of the total number of flows in the set, that is, TP/(TP + FN).

**MACHINE LEARNING METHODS**: Below, a brief overview is provided of illustrative linear classifiers used, their optimization processes, which are referred to as learning, and their efficient implementation. Four classes of methods are focused on: Naive Bayes , AdaBoost , and Maximum Entropy or Maxent, and SVMs. In the case of Maxent, the Sequential L1-regularized Maxent method is used. They give us several ways to train a linear classifier using very different frameworks. (Note: The run time implementation of this linear classifier, which is the dot product between the feature vector, is independent of which method is used.

**Naive Bayes** models: for each feature independently, a discrete distribution that gives its conditional probability given the class. Assuming these distributions are independent, the probability to observe an example given a class is the product of the probabilities to observe each feature given the class..

Naive Bayes is provided as a baseline. While it does not minimize explicitly the training error and while the independence assumption it relies on is very far from the truth, it often provides reasonable performance. In addition, the learning procedure is very simple and *incremental:* a learning example just has to be processed once to be learned, it does not need to be stored, and it can be used to further train a deployed system. A system based on Naive Bayes can be continuously updated as new labeled data becomes available, this is why it is widely used for applications such as SPAM filtering.

Large margin or regularized classifiers such as support vector machines (SVMs), Adaboost, and Maximum Entropy ((Maxent) in particular Sequential L1-regularized Maxent) are obvious choices for use in semantic classification. (For additional information on these classifiers *see* Vladimir N. Vapnik. Statistical Learning Theory. John Wiley & Sons, 1998.; *see also* Yoav Freund and Robert E. Schapire. Experiments with a New Boosting Algorithm. In Proceedings of ICML'96, pages 148-156, 1996; *see also* Miroslav Dudik, Steven Phillips, and Robert E. Schapire. Performance Guarantees for Regularized Maximum Entropy Density Estimation. In Proceedings of COLT'04, Banff, Canada, 2004. Springer Verlag; *see also* Miroslav Dudik, Steven Phillips, and Robert E. Schapire. Performance Guarantees for Regularized Maximum Entropy Density Estimation. In Proceedings of COLT'04, Banff, Canada, 2004. Springer Verlag.)

These linear classifiers are well known in the art as all three large margin or regularized classifiers offer learning processes that are scalable with runtime implementations that may be very efficient. These algorithms give users three ways to train a linear classifier using very different frameworks. Each of these algorithms may be used across multiple processors or clusters of computers (parallelization) to increase learning speed.

SVMs look for a separating hyperplane 1002 with a maximum separation margin 1010 between two classes, as shown in Figure 1. A first set of classes 1006 and a second set of classes 1008 are separated on the separation hyperplane. The hyperplane 1002 can be expressed as weight vector 1004, which is also illustrated in Figure 1. The margin is the minimum distance between the projections of the points of each class on the direction of the weight vector. The maximum margin 1010 is shown in Figure 1 as the distance between the first set of classes 1006 and the second set of classes 1008. Figure 1 represents hard margin SVMs, where classification errors on the training set are not permitted. For discussion purposes in the remaining description of the invention, SVMs are generalized as soft margin SVMs, which allow some errors, i.e. vectors that are inside or on the wrong side of the margin.

AdaBoost incrementally refines a weighted combination of weak classifiers. AdaBoost selects at each iteration a feature k and computes, analytically or using line search, the weight $w_k$ that minimizes a loss function. In the process, the importance of examples that are still erroneous is "adaptively boosted", as their probability in a distribution over the training examples that is initially uniform is increased. Given a training set associating a target class $y_i$ to each input vector $x_i$, the AdaBoost sequential algorithm looks for the weight vector w that minimizes the exponential loss (which is shown to bound the training error):

$$C = \sum_{i=1}^{M} \exp(-y_i w^T x_i)$$

AdaBoost also allows a log-loss model, where the goal is to maximize the log-likelihood of the training data $\log(\prod_i P(y_i|x_i))$. The posterior probability to observe a positive example is

$$P(y_i = 1 | x) = \frac{1}{1 + \exp(-w^T x_i)}$$

Finally, Maxent relies on probabilistic modeling. In particular, ones assumes that the classification problem is solved by looking for the class y which maximizes a distribution argmax P(y|x). (*See;* Adam L. Berger, Stephen A. Della Pietra, and Vincent J. Della Pietra. A maximum entropy approach to natural language processing. Computational Linguistics, 22(1):39-71, 1996.)

First, how well this distribution matches the training data is represented by constraints which state that features must have the same means under the empirical distribution (measured on the training data) and under the expected distribution (obtained after the training process). Second, this distribution must be as simple as possible. This can be represented as a constrained optimization problem: find the distribution over training samples with maximum entropy that satisfies the constraints. Using convex duality, one obtains as a loss function the Maximum Likelihood. The optimization problem is applied to a Gibbs distribution, which is exponential in a linear combination of the features:

$$P(x) = \frac{\exp(w^T x)}{Z}$$

with

$$Z = \sum_{i=1}^{M} \exp(w^T x_i)$$

Sequential L1-regularized Maxent is one of the fastest and most recent algorithms to estimate Maxent models. It offers a sequential-update algorithm which is particularly efficient on sparse data and allows the addition of L1-Regularization to better control generalization performance.

AdaBoost, which is large margin classifier and implicitly regularized, and Maxent, which is explicitly regularized, have also been shown, both in theory and experimentally, to generalize well in the presence of a large number of features. Regularization favors simple model by penalizing large or non-zero parameters. This property allows the generalization error, i.e. the error on test data, to be bounded by quantities which are nearly independent of the number of features, both in the case of AdaBoost and Maxent. This is why a large number of features, and consequently a large number of classifier parameters, do not cause the type of overfitting (i.e. learning by heart the training data) that used to be a major problem with traditional classifiers.

All of the above algorithms have shown excellent performance on large scale problems. Adaboost and Maxent are particularly efficient when the data is sparse, that is when the proportion of non-zero input features is small (In the present studies, only 1 feature out of 256 is non-zero). Their learning times scale linearly as a function of the number of training samples N.

Support Vector Machines have a learning time in theory slower, with a learning time that scales quadratically in N. SVMs are more powerful, as a kernel can be added to represent our knowledge about the problem. However, addition of such a kernel results in a system with a much slower runtime performance. SVMs were experimented on small datasets but were not considered in the large scale experiments.

A fifth algorithm, called Perceptron was found to be very fast and yield similar performance, but the convergence of its learning procedure can be problematic if there is noise in the data, and it was not considered as robust enough for full automatization.

Naive Bayes, AdaBoost, and Maxent were chosen because of the robustness and scalability of their learning processes and the fact that their runtime implementation can be very efficient. Adaboost and Maxent provide better performance than Naïve Bayes, at the expense of a more complex and non-incremental training procedure. Adaboost and Maxent are efficiently implemented in AT&T LLAMA software package.

**Table 1: Number of training and test vectors in data sets**

| Dataset | Training | | | Testing | |
|---|---|---|---|---|---|
| | 8hr | 4hr | 1hr | 8/2004 | 3/2005 |
| ftp ctrl | 6,678 | 3,255 | 824 | 7,152 | 490 |
| smtp | 343,744 | 172,647 | 43,987 | 363,062 | 208,399 |
| pop3 | 100,472 | 49,913 | 13,376 | 103,150 | 43,583 |
| imap | 1,512 | 545 | 240 | 2,183 | 535 |
| https | 48,763 | 26,747 | 6,812 | 59,060 | 27,604 |
| http | 547,813 | 263,876 | 76,308 | 649,074 | 260,441 |
| ssh | 797 | 759 | 9 | 60 | 341 |
| Total | 1,242,515 | 614,773 | 165,815 | 1,381,533 | 1,065,018 |

To evaluate the performance of the described methods and systems focus is placed on building application layer signatures for ftp control, smtp, pop3, imap, https, http and ssh. These applications were chosen for multiple reasons: (1) they cover a wide range of application classes in today's Internet including interactive, large file transfer, transactional, and encrypted communication-based applications and (2) it is easy to build the required pre-classified training and test sets for these applications since they are mainly still using their default ports. Default port numbers is used to build the training and test sets. In practice one expects that the training sets would be built by other means which would allow us to include, for example, P2P applications which do not use default port numbers today. Possible approaches in constructing the training sets include monitoring of traffic on a VPN type network in which traffic can be mapped to applications based on server IPs. In either case the resulting signatures could then be utilize in other locations.

**Illustrative Experimental Setup of Methods**: To build the training and test sets more then 100GByte of packet traces were collected on a high speed access network serving more than 500 residential customers. The training data was collected in August 2004 and test data was collected in August 2004 as well as in March 2005. For training, training sets covering a total of 1, 4, and 8 hours of traffic were used. Each set consists of 4 partitions which are equally spaced within a 24 hour period to account for variations in the applications and traffic mix during a daily cycle (for example each 8 hour set consists of four 2-hour long data partitions spaced 6 hours apart). After compiling these data sets they were processed as follows:

(1) Reassemble every TCP connection into two unidirectional flow records. Determine the server port of each flow by analyzing the TCP handshake.

(2) Generate a feature vector using the algorithm described previously while only considering at most the first 64 and 256 Bytes of are assembled TCP flow (less if the connection did not have that many bytes in a particular direction).

(3) Build a class file for each application. A feature vector for a flow is classified as belonging to the class if the server port of the flow matches the default server port for the application to be classified. Table 1 shows the summary statistics of the resulting data sets.

**Illustrative Experimental Results**: In our illustrative demonstration we trained one classifier was trained for each application using all three algorithms and all three training sets. The feature vectors in the training sets represent the first 64 Bytes of each TCP flow. An evaluation was done on which algorithm and training set resulted in the best error rate for a particular application in the 8/2004 test set. After that, we apply the resulting classifier for each application to classify the flows in the test set. For each flow, the classifier returns a probability value to indicate whether the flow belongs to an application. We classify a flow belonging to the application if the probability for the flow is at least 0.53.

As shown in Table 2 for all applications the longest training set we considered yielded the best result and for all applications but one AdaBoost performed the best. Maxent performed slightly better for http (less than an improvement of 0.005% in the Error Rate). An explanation for this good performance of AdaBoost is that the data is not noisy and contains very few outliers (because of the way it was generated: this is confirmed by the very low error rate). AdaBoost may not perform so well if the data is noisier [6]. Overall our error rate is below 0.51% for all applications we considered, that is, we correctly classify more than 99% of all flows using our approach. In addition the precision is above 0.99 for all applications, indicating very low levels of classification noise. The Recall which indicates how many connections that would have been found in the test set is above 0.94 for all application with the exception of ssh. The performance of ssh is most likely caused by the fact that only 797ssh training vectors in our training set were used with more than 1.2 million training vectors.

As stated above, for each classifier of a particular application each vector was considered to be classified as belonging to the application if the returned probability is at least 0.5. To evaluate the impact of this choice the threshold was varied in 0.01 increments from 0 to 1 and the best error rate for each application calculated using the optimal threshold for our test set. A preclassified test set should not be used to learn a threshold, however, using this approach an upper bound can determine on how much expected improvement there may be if another threshold is being used. For all application it was found that the improvement in error rate over the 0.5 threshold was less than 0.03%. Therefore, it was concluded that a 0.5 threshold is sufficiently close to the optimum that it can safely be used in practice.

Since Naive Bayes classifiers are known and extremely simple one interesting question to ask is how much improvement is obtained from using more sophisticated machine learning methods on the described application layer data. Compared to the best AdaBoost classifier on the 8/2004 test set, the error rate obtained with Naive Bayes is 4 to 12 times larger, which is a considerable difference. It should be noted that a default smoothing probabilities was used, and that their choice could be critical for Naive Bayes performance. However, none of the other methods benefited from any task specific tuning, as machine learning is expected any form of human intervention. Thus, it was demonstrated that a more sophisticated approach provides substantial payoffs.

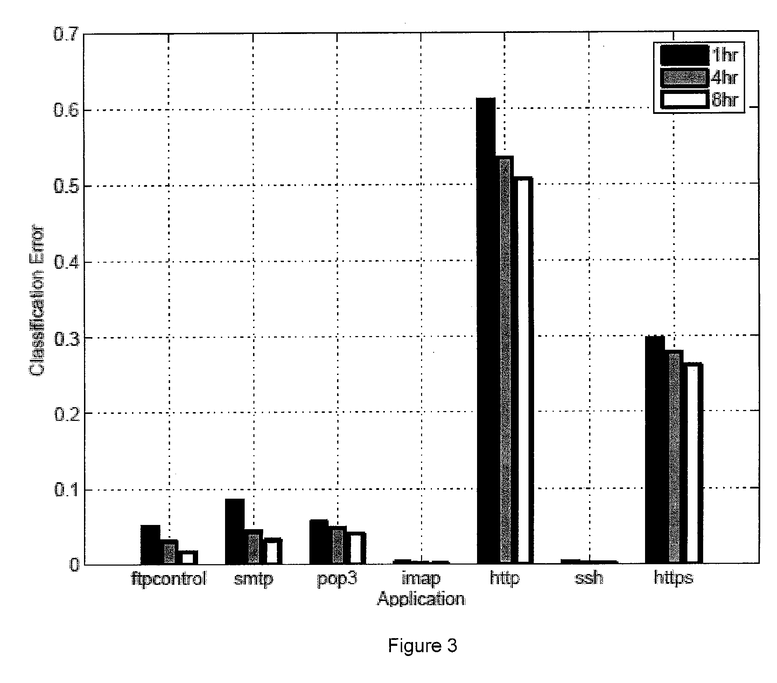

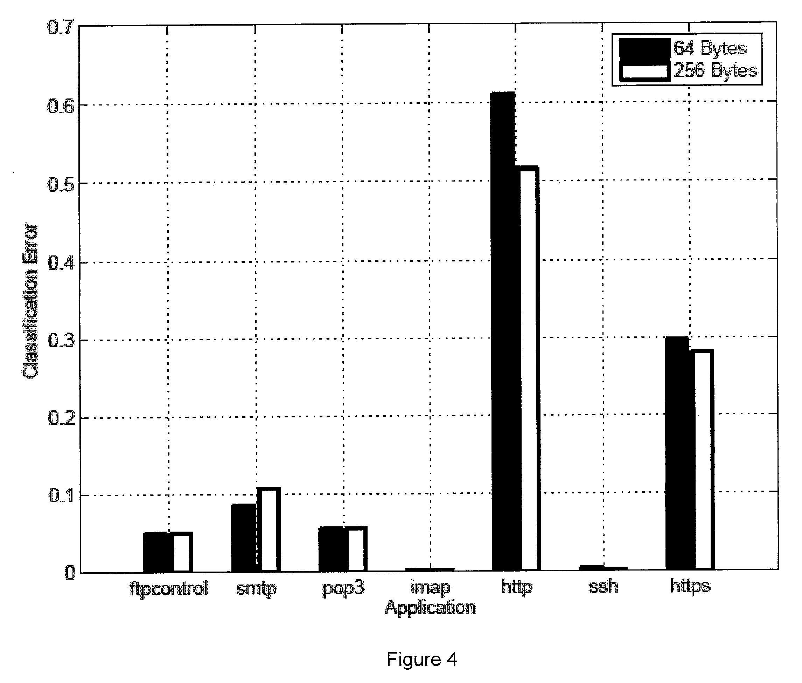

**Choosing the Parameters**: Another aspect to examine is how large a training set is required to achieve acceptable results. Figure 3 illustrates how the error rate differs for the different applications using AdaBoost and considering the first 64 Byte of each flow as the classification vector. Even though the absolute error rate is small even for a 1 hour training set the error does improve with longer training sets. In particular the improvement from a one to a four hour training set is noticeable across all applications. As is seen later, the training set size in practice is limited by the memory available during the learning process. A similar issue to consider is how many bytes at the beginning of each flow should be considered. To evaluate this, the error rate was computed for the different applications using AdaBoost and the1 hour training set varying the Bytes considered from 64 to 256. Figure 4 illustrates the results of this experiment. Overall the results seem quite stable. In fact, considering more data slightly decrease the Error Rates of http and https while increasing the Error Rate of smtp. This indicates that for the applications considered there is enough information in the first 64 Bytes of each flow to identify the application. In fact considering more data seems to lead to overfitting in the case of smtp.

**Signature Durability:** Another issue concerns the length of time a signature can be used. The answer to this question depends on many factor such as the release schedule of new versions of a particular application as well as changes in user behavior. To understand how stable the signatures shown in Table 2 are over a longer period of time, the result for the algorithms and training sets shown in the table for 3/2005 set instead of the 8/2004 set shown is computed. Comparing those results to the earlier test set shows that the error rates for ftp control, smtp, pop3 and https actually improve slightly. Whereas the error rates for ssh and imap increase to approximately 1% and the http error rate reaches 2.2%. In this set Precision is above 0.94 forall applications, whereas Recall is above 0.91 with the exception of imap which has a recall of 0.82. Overall this indicates that our classifiers maintain quite good performance on test data 7 months newer than the training data. Apractical implication is that the signatures can be used for long time periods without recourse to frequent retraining which can be an expensive process.

**Table 2: Best classification results for each application considering the 8/2004 test set.**

| Application | Training set | Training User Time | Algorithm | Error Rate in % | Precision | Recall | |w| |
|---|---|---|---|---|---|---|---|
| ftp control | 8hr | 4h53m17.86s | AdaBoost | 0.016 | 0.996 | 0.971 | 612 |
| smtp | 8hr | 7h33m58.07s | AdaBoost | 0.031 | 0.998 | 0.999 | 480 |
| pop3 | 8hr | 5h44m36.53s | AdaBoost | 0.039 | 0.995 | 0.999 | 356 |
| imap | 8hr | 12m2.16s | AdaBoost | 0.000 | 1.000 | 0.999 | 189 |
| https | 8hr | 7h28m39.37s | AdaBoost | 0.258 | 0.992 | 0.946 | 271 |
| http | 8hr | 1h0m17.06s | Maxent | 0.508 | 0.990 | 0.999 | 5666 |
| ssh | 8hr | 20m54.00s | AdaBoost | 0.001 | 1.000 | 0.866 | 74 |

**Performance Overheads**: In this section both the performance and memory requirements of building a classifier as well as the performance and memory requirements of executing it on a data feed which needs to be classified are considered. The training times for the best classifiers are shown in Table 2. As shown the training time varies from slightly more than one hour to less than 8 hours of user time on a single 900Mhz UltraSparcIII processor using AdaBoost for all but the http application for which we use Maxent as shown in Table 2. Generally the Maxent method terminates within less than 61 minutes where as this version of AdaBoost takes longer (an Adaboost implementation at least as fast as Maxent is under deployment). Considering that the training phase is performed infrequently off line and that we used slow processors in the described illustrative experiment the training times are acceptable for the task. The system we used had 192GByte of main memory which in theory limited the training data to 750M examples assuming a training vector which is based on 64 bytes of data. Therefore, the memory is more than enough for the described experiment. In fact, all results presented herein are computed with less than 4GB of memory requirements. The memory and performance requirements for real time classification depend on the feature vector x, the weight vector w (which represents the classifier parameters) and the algorithm chosen to compute the dot product of the two vectors. This algorithm depends on whether these vectors are represented with their *full* list of values (including the zeros) or a *compacted* list of index/values, where the zeros have been removed. As the first 64 bytes of each TCP flow into a feature vector are encoded, the full feature vector representing a TCP flow has 64_256 = 16384 components, but its compacted version only requires 64 entries. Similarly, the classifier weight vector w has |w| none-zero elements and can also be compacted. The number of such elements is shown for our classifiers in Table 2. The largest such classifier contains 5666 non-zero elements with the typical containing less than 1000 non-zero elements. Again consider those vectors to be sparse. Computing the dot product of two sparse vectors is most easily done by storing each vector as an ordered list (by offset) of non-zero elements. Then compute the dot product by traversing both lists (similar to a merge operation). This has an overhead of $O(|w| + |x|)$ compare and add operations where $|x| = 64$ is the number of non-zero elements in the feature vector. For example, consider the classifier with the largest w in our experiments we need 5666_8 = 45, 328 Bytes of memory to store w which is small enough to fit into first level cache of most modern CPUs. Classifying a feature vector representing 64Bytesof a TCP flow then requires at most 5666 + 64 = 5730 compare and add operations with most classifiers requiring less than 600 such operations (see Table 2). This overhead is low enough to facilitate application layer classification at high speed links.

Herein, methods and systems for automatically identifying application signatures is described. In particular, three machine learning methods were implemented as part of the methods to automatically identify the signatures for a wide range of applications. Also two sophisticated machine learning methods work well, that is, the automatically constructed signatures can be used for online application classification with low error rate, high precision and high recall, based on examining a modest amount of information at the beginning of the communication. The resulting signatures remain highly accurate to traffic variations on the time scale of several months. The computational complexity of applying the constructed signatures for real time application classification was also illustrated. The illustrative results show that the constructed signatures are suitable for online application classification on highspeed links.

Further in correspondence with Figure 1, it is reiterated that one or more aspects of the invention may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like.

While the invention has been described with respect to specific examples including presently preferred modes of carrying out the invention, those skilled in the art will appreciate that there are numerous variations and permutations of the above described systems and techniques. Thus, the spirit and scope of the invention should be construed broadly as set forth in the appended claims.

**Claims**

**1.** A method for identifying traffic to an application, comprising the steps of:

monitoring communication traffic in a network;
identifying data from communication traffic content; and
constructing a model for mapping the communication traffic for an application derived from data identified from the communication traffic content.

**2.** The method for identifying traffic to an application of claim 1, further comprising the step of modifying the model for mapping the communication traffic for an application based upon one of a change in the data identified from the communication traffic content and a signature accuracy measurement.

**3.** The method for identifying traffic to an application of claim 1 or 2, the step of identifying data from communication traffic content consisting of inspecting application layer information.

**4.** The method for identifying traffic to an application of claim 1, 2 or 3, the step of constructing a model for mapping the communication traffic for an application derived from identified data including training a model by inputting a training set.

**5.** The method for identifying traffic to an application of claim 4, wherein the training set includes a pre-classified set of feature vectors.

**6.** The method for identifying traffic to an application of claim 5, said constructing step further including performing a single application signature classification.

**7.** The method for identifying traffic to an application of claim 5, said constructing step further including encoding raw application level data as a feature vector.

**8.** The method for identifying traffic to an application of claim 5, 6 or 7, wherein the identified data is positioned is located in a first set of bytes of traffic flow.

**9.** The method for identifying traffic to an application of any of claims 4 to 8, further comprising the step of classifying communication traffic based upon the model.

**10.** The method for identifying traffic to an application of any one of claims 1 to 9, further comprising the step of determining signature accuracy of the model.

**11.** The method for identifying traffic to an application of claim 10, wherein signature accuracy is defined by one of error rate, precision, and recall.

**13.** The method for identifying traffic to an application of any one of claims 1 to 11, said constructing step including training a linear classifier.

**14.** The method for identifying traffic to an application of claim 13, the linear classifier including one of Naive Bayes, AdaBoost, Regularized Maximum Entropy, Support Vector Machines, and Perceptron.

**15.** A system for identifying traffic to an application comprising:

a controller communicably linked to network communication paths;
means for monitoring communication traffic content in a network;
means for identifying data from communication traffic content; and
means for constructing and training a model for mapping the communication traffic for an application derived from data identified from the communication traffic content.

**16.** The system for identifying traffic to an application of claim 15, the means for constructing and training a model including a linear classifier selected from one of Naive Bayes, AdaBoost, Regularized Maximum Entropy, Support Vector Machines, and Perceptron.

**17.** The system for identifying traffic to an application of claim 16, further comprising means for simultaneously constructing and training models for a plurality of applications.

**18.** A computer readable medium containing instructions stored thereon for execution by a computer, the instructions including the steps of:

monitoring communication traffic in a network;
identifying data from communication traffic content; and

constructing a model for mapping the communication traffic for an application derived from data identified from the communication traffic content.

**19.** The computer readable medium of claim 18, the instructions further including the steps of determining signature accuracy of the model and classifying communication traffic based upon the model.

**20.** The computer readable medium of claim 19, the instructions further including the step of training a linear classifier using a training set.

Figure 1

Figure 2

```
          ┌─────────┐
          │  Start  │
          └─────────┘
               │
               ▼
       ┌───────────────┐
       │  Monitoring   │◄──────────┐
       │     210       │           │
       └───────────────┘           │
               │                   │
               ▼                   │
       ┌───────────────┐           │
       │ Preprocessing │           │
       │     220       │           │
       └───────────────┘           │
               │                   │
               ▼                   │
       ┌───────────────┐           │
       │Model Training │           │
       │     230       │           │
       └───────────────┘           │
               │                   │
               ▼                   │
       ┌───────────────┐           │
       │  Construct    │           │
       │  Signature    │───────────┘
       │     240       │
       └───────────────┘
               │
               ▼
          ┌─────────┐
          │   End   │
          └─────────┘
```

200

Figure 3

Figure 4

EP 1 715 624 A1

**European Patent Office**

**EUROPEAN SEARCH REPORT**

Application Number

EP 06 11 2837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DENIS ZUEV, ANDREW W. MOORE:  "Traffic Classification Using a Statistical Approach"<br>PASSIVE AND ACTIVE NETWORK MEASUREMENT: 6TH INTERNATIONAL WORKSHOP, PAM 2005, [Online] 31 March 2005 (2005-03-31), - 1 April 2005 (2005-04-01) pages 321-324, XP002389081<br>Boston, MA, USA<br>Retrieved from the Internet:<br>URL:http://springerlink.metapress.com/(f53ym3552o02v3452egpemuh)/app/home/contribution.asp?referrer=parent&backto=issue,25,36;journal,583,3902;linkingpublicationresults,1:105633,1> [retrieved on 2006-07-05]<br>* abstract *<br>* table 1 *<br>* page 321, line 13 - page 322, line 2 *<br>* page 322, line 13 - line 24 *<br>* page 322, line 39 - line 41 *<br>* page 323, line 1 - line 10 *<br>* page 323, line 21 - line 22 *<br>-----<br>-/-- | 1-11, 13-20 | INV.<br>H04L12/26<br><br><br><br><br><br><br><br><br><br>TECHNICAL FIELDS SEARCHED (IPC)<br><br>H04L |

The present search report has been drawn up for all claims

| Place of search | Date of completion of the search | Examiner |
|---|---|---|
| The Hague | 6 July 2006 | Tyszka, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

Application Number

EP 06 11 2837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUBHABRATA SEN, OLIVER SPATSCHECK, DONGMEI WANG: "Accurate, Scalable In-Network Identification of P2P Traffic Using Application Signatures" PROCEEDINGS OF THE 13TH INTERNATIONAL CONFERENCE ON WORLD WIDE WEB, [Online] 17 May 2004 (2004-05-17), - 22 May 2004 (2004-05-22) pages 512-521, XP002389082 New York, NY, USA Retrieved from the Internet: URL:http://portal.acm.org/citation.cfm?id= 988742> [retrieved on 2006-07-05] | 1-3,10, 11,18,19 | |
| A | * page 512, left-hand column, line 2 - line 22 * <br> * page 513, right-hand column, line 26 - line 31 * <br> * page 514, right-hand column, line 19 - page 515, left-hand column, line 7 * <br> * page 515, left-hand column, line 24 - line 26 * <br> * page 517, right-hand column, line 1 - line 6 * <br> * page 517, right-hand column, line 25 - line 32 * <br> * page 520, right-hand column, line 21 - line 23 * | 4-9, 13-17,20 | |

-----

-/--

**TECHNICAL FIELDS SEARCHED (IPC)**

The present search report has been drawn up for all claims

| Place of search | Date of completion of the search | Examiner |
|---|---|---|
| The Hague | 6 July 2006 | Tyszka, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 06 11 2837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEBASTIAN ZANDER, THUY NGUYEN, GRENVILLE ARMITAGE: "Self-Learning IP Traffic Classification Based on Statistical Flow Characteristics" PASSIVE AND ACTIVE NETWORK MEASUREMENT: 6TH INTERNATIONAL WORKSHOP, PAM 2005, [Online] 31 March 2005 (2005-03-31), - 1 April 2005 (2005-04-01) pages 325-328, XP002389083 BOSTON, MA, USA Retrieved from the Internet: URL:http://www.springerlink.com/(drvnbaykg zlfxg45jqvvvc45)/app/home/contribution.asp ?referrer=parent&backto=searcharticlesresu lts,1,1;> [retrieved on 2006-07-05] * abstract * * page 326, line 35 - line 39 * * figure 1 * * page 327, line 2 - line 24 * ----- | 1,3,4, 6-9, 13-20 | |
| | | | TECHNICAL FIELDS SEARCHED (IPC) |

The present search report has been drawn up for all claims

| Place of search | Date of completion of the search | Examiner |
|---|---|---|
| The Hague | 6 July 2006 | Tyszka, K |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 67424505 P

### Non-patent literature cited in the description

- **VLADIMIR N. VAPNIK.** Statistical Learning Theory. John Wiley & Sons, 1998
- **YOAV FREUND ; ROBERT E. SCHAPIRE.** Experiments with a New Boosting Algorithm. *In Proceedings of ICML'96,* 1996, 148-156
- Performance Guarantees for Regularized Maximum Entropy Density Estimation. **MIROSLAV DUDIK ; STEVEN PHILLIPS ; ROBERT E. SCHAPIRE.** In Proceedings of COLT'04. Springer Verlag, 2004
- Performance Guarantees for Regularized Maximum Entropy Density Estimation. **MIROSLAV DUDIK ; STEVEN PHILLIPS ; ROBERT E. SCHAPIRE.** In Proceedings of COLT'04. Springer Verlag, 2004
- **ADAM L. BERGER ; STEPHEN A. DELLA PIETRA ; VINCENT J. DELLA PIETRA.** A maximum entropy approach to natural language processing. *Computational Linguistics,* 1996, vol. 22 (1), 39-71